# EUROPEAN PATENT SPECIFICATION

(11) **EP 3 578 050 B1**
(45) Date of publication and mention of the grant of the patent: **02.12.2020**
(21) Application number: 19173632.1
(22) Date of filing: 09.05.2019
(51) Int. Cl.: A21C 11/00, A21C 11/08, A21C 5/00, A21C 11/04

(54) **DISC-SHAPED MOLD FOR SHAPING DOUGH**
SCHEIBENFÖRMIGE FORM ZUR TEIGFORMUNG
MOULE EN FORM DE DISQUE POUR FACONE LA PÂTE

(30) Priority: 04.06.2018 TR 201807920
(43) Date of publication of application: 11.12.2019
(73) Proprietor: Eti Gida Sanayi Ve Ticaret Anonim Sirketi, Eskisehir (TR)
(72) Inventor: KANATLI, AHMET FIRUZHAN, ESKISEHIR (TR)
(74) Representative: Sevinç, Cenk

(56) References cited:
- EP-A2- 1 008 299
- WO-A1-2016/116173
- US-A- 4 381 697
- US-B2- 8 622 730

## Description

### Technical Field

The present invention relates to a rotational mold used in the food industry especially in manufacturing bakery products such as biscuits, crackers, and etc., wherein said rotational mold has mold cavities shaping the soft dough and mold discs on which said mold cavities are disposed and wherein said rotational mold enables manufacturing food with a standard and increased capacity by virtue of the fact that the contact surfaces of the mold discs are specially shaped with respect to the shape of the mold cavities and that the mold discs are juxtaposed without leaving a space (so that the discs are in mesh with each other).

### State of the Art

In food industry, the production rate, capacity and conformity to standards of the food products, especially of those which are manufactured at the industrial scale, are quite important. Thus, in general, multiple manufacturing is carried out in the production line. In the production of bakery products, especially of the biscuits and the like, cylindrical and different types of molds are used. Rotational mold is one of the frequently used types of the molds. However, increasing the capacity in the production lines which use rotational molds requires significant investment.

In the production of the bakery products such as biscuits, crackers and the like, the ingredients are first of all mixed in a mixing tank until a desired texture is achieved, passed through certain chambers, and stuffed into the mold cavities on the rotational mold via stuffer drum. The dough stuffed into the mold cavities is disposed on the conveyor belt in the production line in a shaped form. Said shaping is the result of the rotational motion of the mold. Said operation is carried out continuously with certain intervals. In industrial mass productions, the molds which give the dough its desired shape lose their function of shaping as a result of being deformed in time and this hampers the standardization of the shapes of the bakery products. On the other hand, maintenance of the deformed molds brings in increased costs and hinders the production process.

In the mass production of food products, non-standard sizes are not desired for the bakery products such as biscuits, crackers and the like. In packaging of the products, those which are not uniform in size due to a lack of standardization are considered to be defective. Even if said products are packaged without any problem, this may lead to customer dissatisfaction.

Patent document CN 88211510U of the state of the art discloses molds to be used in a production of biscuits which molds are disposed over a drum shaping said biscuits. Metal molds are disposed and fitted in the drum. The edges of the molds exhibit a circular arc shape. Since fabricated this way, the shapes of the molds are irreversible. The monolithic molds are disadvantageous in terms of both capacity increase in mass production and cleaning and thus affect the manufacturer adversely in terms of time and financial concerns.

The invention according to the patent document "CN2089247U" in the state of the art proposes a solution to the drawbacks of in the related field and relates to a biscuit shaping drum mold. The biscuit mold comprises biscuit mold cavities which are positioned at a close distance to each other. By virtue of the molds used in the biscuit machine, a reduction in electricity consumption is aimed.

The invention disclosed in "CN103934881A" in the state of the art relates to a special shaped biscuit shaping machine. The shaping molds are located on the shaping frame and each shaping mechanism contains a mold and a rotating shaft and said rotating shafts are mounted on the shaping frame so as to be movable therein. Although the molds are movable, the capacity cannot be increased and due to the fact that the molds are not fit into a certain housing, as a result of the movable molds disengage in the long run, the dough may be cut into undesired sizes.

US4381697A in the prior art discloses an apparatus to make cookies which consists of a drum shaped device known as a die roll having cavities for shaping the cookies. The drum shaped die roll receives dough from a feed hopper and deposits the shaped dough on the surface of a transfer conveyor at a first location. The apparatus comprises dough bit shaping means, transfer conveyor means and oven means.

Another prior art, WO2016116173A1 relates to a dough processing machine (1) having a first conveyor belt (10) for conveying a dough strip (105), and having a cutter tool (30) for cutting out dough blanks (101), wherein the cutter tool (30) has a drum (31) which is rotatably mounted about a drum axis (A) and which, on the circumference of the drum, has outwardly projecting cutting edges (32), by means of which the drum (31) runs opposite and/or on the first conveyor belt (10), wherein the cutting edges (32) form individual cutter shapes (33), which are arranged distributed over the circumference of the drum (31).

Patent document no. US8622730B2 discloses an apparatus for forming and cutting a dough sheet into a plurality of uniformly formed spherical dough products. This apparatus comprises a conveyor, a rotatable drum, a plurality of cutter molds, a sleeve supporting the plurality of cutter molds.

Another patent application in the prior art, EP1008299A2, relates to a moulding roller for forming biscuits, comprising one or more laminated sleeve components (33) mounted on a supporting shaft (38), each such sleeve component (33) comprising an outer layer (34) made of a material having strong wear properties, such as a copper alloy, and an inner layer (32) made of a material having a non-stick characteristic for dough, such as a polyurethane plastics material, the outer layer (34) having holes (28) through it which expose areas of the inner layer (32) on which patterns are formed which are to be embossed onto or impressed into the biscuits in use of the moulding roller.

In order to increase capacity without changing the amounts of the bakery products such as biscuits, crackers and the like, the number of disks should be increased. The increased length of the drum as a result of an increase in the number of disks requires a revision in the equipment according to the size of the drum. This leads to an increase in costs and time. Thus, a novel biscuit mold is needed for a more efficient mass production with lower costs since, in the molds for the bakery products proposed by the documents in the state of the art, the capacity thereof cannot be increased and said molds cannot be fixed into a certain housing like a slot.

### Advantages Provided by The Present Invention

Present invention relates to a rotational mold which meets the requirements mentioned above, overcomes all of the disadvantages and provides some additional advantages and allows for a mass production without giving rise to an alteration in sizes of the bakery products such as biscuits, crackers and the like.

The object of the invention is to provide a rotational mold for shaping soft dough used in the production of bakery products such as biscuits, crackers and the like, in which the contact surfaces of the mold discs are specially shaped in accordance with the mold cavities and in which the discs are juxtaposed on the metal drum (the discs are in mesh with each other) without leaving a space there between.

Another object of the invention is to provide a capacity increase of %15-30 and a material saving of %15-30 by a novel method of disc processing provided that the length of the rotational mold and the dimensions of the mold cavities are kept constant.

Another object of the invention is to provide fixing by juxtaposition of the mold discs (the discs are in mesh with each other) without leaving space between them by specially shaping the contact surfaces of the mold cavities with respect to the shapes of the mold cavities by means of attaching the mold discs by a special profile to each other, without the need for slotting on the metal drum.

Another object of the invention to provide convenience in the assembling, disassembling and cleaning of the molds by means of attaching the discs, the contact surfaces of which are specially shaped with respect to the mold cavities, by juxtaposition (the discs are in mesh with each other) without leaving space between them.

Another object of the invention is to provide a standard shaping of the biscuit and cracker dough and enable a continuous manufacturing process by means of the special form of said rotational mold.

Another object of the invention is to prevent a negative effect on the manufacturing process in case the mold discs, on which the mold cavities are disposed to shape the bakery product such as biscuits, crackers and the like, crack or break during manufacturing process, by virtue of the fact that they are in close fit.

### Description of the Figures

- **Figure 1**: illustrates the general view of the rotational mold
- **Figure 2**: illustrates the general view of the rotational mold and the mold discs
- **Figure 3**: illustrates the perspective view of the mold disc.
- **Figure 4**: illustrates the frontal view of the mold disc and the mold cavities
- **Figure 5**: illustrates the close view of a group of three mold cavities
- **Figure 6**: illustrates the view of the trough and peak points of the lateral surfaces of the specially formed mold disc
- **Figure 7**: illustrates the geometrical view of the specially formed mold disc.

### Reference Numbers

1. Rotational mold
   1.1. Driving shaft
   1.2. Coupling piece of the metal drum
   1.3. Metal drum
   1.4. Mold disc of special form
      1.4.1. Mold cavity
      1.4.2. Peak point
      1.4.3. Trough point
      1.4.4 Lateral surface

### Description of The Invention

Present invention relates to a rotational mold disc (1.4) disposed on the rotational mold (1) used for shaping the soft dough ensuring baking perfection and a homogeneous baking.

The rotational mold (1) consists in general of the driving shaft (1.1), the coupling piece of the metal drum (1.2), the metal drum (1.3), specially formed mold discs (1.4) and the mold cavities (1.4.1). The rotational mold (1) is connected to the motor, the shaping machine, the conveyor belt and the stuffing drum.

In this detailed description, present invention is explained with reference to some illustrative examples which in no way intent to limit the invention but to help understanding the invention clearly. To that end, the rotational mold (1) which is used to shape a bakery product such as biscuits, crackers and the like, and which is constituted by juxtaposition of the mold discs (1.4) specially formed with respect to the shape of mold cavities (1.4.1) without leaving space between them on the metal drum (1.3) (the discs are in mesh with each other) and the structural elements constituting said mold (1) are described.

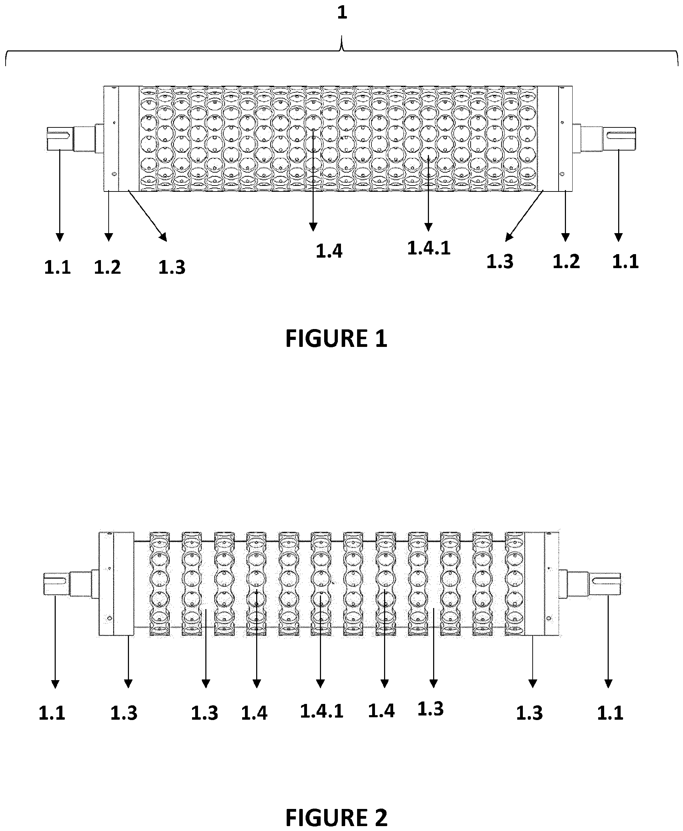

Figure 1 shows the views of the rotational mold (1) and its elements. The rotational mold (1) consists in general of the mold cavities (1.4.1) which shape the dough inserted into the cavities in a chamber form in which the mixing dough in inserted; mold discs (1.4) which are in cylindrical form and which thereby shape the bakery product such as biscuit, cracker and the like by a mechanical pressure and the contact surfaces of which are specially formed; metal drum (1.3) which houses the specially formed mold discs (1.4); a driving shaft (1.1) which translates the driving force deriving from the motor to the metal drum (1.3); and a coupling piece of the metal drum (1.2) which connects the metal drum (1.3) and the driving shaft (1.1).

The dough mix is fed to the rotational mold (1) manufacturing the bakery products such as biscuits, crackers and the like, by means of the stuffing drum within the shaping machine.

The shaping machine comprises all the elements of the rotational mold (1) and coupled to place of the rotational mold (1) the production line by chemically anchored bolts and functions as a shaper. It dampers the vibrations and enables the rotational mold (1) to stand still while it is running and allows the metal drum (1.3) to rotate perfectly. Thereby it enables the mold discs (1.4) which have specially formed lateral contact surfaces (1.4.4) to shape the dough of the bakery products such as biscuits, crackers and the like. The body of the shaping machine is preferably of steel.

The rubber drum under the conveyor belt enables the mold discs (1.4) which are on the metal drum (1.3) and the contact surfaces of which are specially formed, to stick the dough mix onto the belt and said drum functions as a solid base. As the metal drum (1.3) runs synchronically with the mold discs (1.4) the contact surfaces of which are specially shaped, it leaves the dough mixture coming from the conveyor belt onto the belt according to the shapes defined by the mold cavity thereon.

The rotational mold (1) is connected to the motor. The motor to which the rotational mold (1) is connected, transmits rotational motion to the driving shaft (1.1) and the conveyor belt line. Thereby the shaped bakery product dough such as the biscuit, cracker and the like are sent to the furnace to be baked via the conveyor belt. The manufacturing process is completed with the packaging of the shaped and baked bakery product. This process is run at certain intervals until it is stopped by the operator.

The part where shaping is performed consists of the metal drum (1.3), the driving shaft (1.1), the coupling piece of the metal drum (1.2) and the mold discs (1.4) the contact surfaces of which are specially formed.

Said elements are the basis of the rotational mold (1).

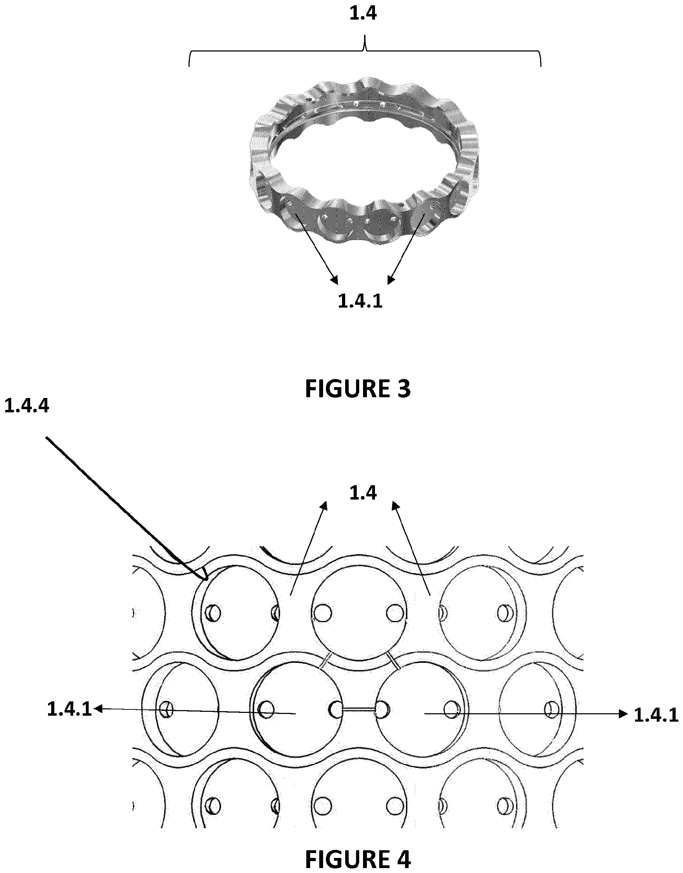

The special purpose designed mold disc (1.4) disposed on the rotational mold (1) used for shaping the soft dough ensuring baking perfection and a homogeneous baking according to the present invention is shown in Figure 3. Said specially formed disc (1.4) is limited by its two lateral surfaces (1.4.4) and houses between the two lateral surfaces (1.4.4) mold cavities (1.4.1) in the form of chambers in which the dough is inserted. It has lateral surfaces (1.4.4) so as to be in accordance with the geometrical forms of the mold cavities (1.4.1) such as circular, triangular, rectangular, and pentagonal. The mold cavities (1.4.1) which are juxtaposed on the specially formed mold disc (1.4) can have a homogeneous but also an asymmetrical alignment. Besides, each of the mold cavities (1.4.1) disposed on the specially formed mold disc (1.4) can have the same geometrical structure but also said mold discs (1.4.1) may have different geometrical structures which are juxtaposed or randomly disposed.

In figure 3 and figure 4, the details of the circular form of the mold cavities (1.4.1) as an illustrative embodiment of the specially designed mold disc (1.4). At least one of the lateral surfaces (1.4.4) of the specially formed mold disc (1.4) is in accordance with respect to the geometrical structure of the mold cavity (1.4.1) disposed thereon. Among the specially formed mold discs (1.4) which are to be disposed on the metal drum (1.3) of the rotational mold (1), at least one of the lateral surfaces (1.4.4) of the first and last specially formed mold discs (1.4) which are to be coupled by the coupling pieces (1.2) of the metal drum is in accordance with the geometrical form of the surface of the coupling piece of the metal drum (1.2) and is preferably of a straight structure.

It has on its lateral surfaces (1.4.4), at least one peak point (1.4.2) as a protrusion and along the distance (a) between two mold cavities (1.4.1) at least one trough point (1.4.3) as a recess, whose geometrical shape is in accordance with the mold cavities (1.4.1) and which is to be aligned with the region where the mold cavity (1.4.1) is positioned. Said specially formed mold disc (1.4) which is limited by lateral surfaces (1.4.4) having peak points (1.4.2) and trough points (1.4.3) are connected to each other in way to be juxtaposed next to each other and in a way that the peak point (1.4.2) of the two specially formed consecutive mold discs (1.4) is to fit into the trough point (1.4.3) of the other specially formed mold disc (1.4) without leaving a space there between.

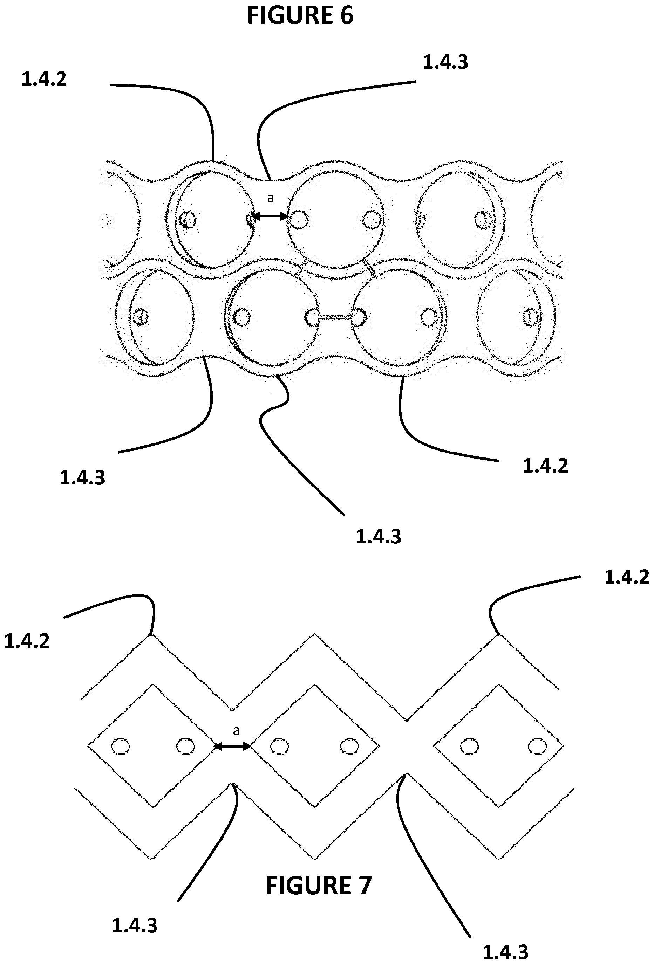

Specially formed mold discs (1.4) are attached to the metal drum (1.3) side by side; this juxtaposition is shown in Figure 2. After juxtaposing the specially formed mold discs (1.4) side by side along the metal drum (1.3), when no available space is left on the metal drum (1.3), the specially formed mold discs (1.4) are inherently contact to each other and a lock and key model is formed by means of the peak points (1.4.2) and trough points (1.4.3) formed on the lateral surfaces (1.4.4) at which they come into contact with each other. A lock and key model are obtained by fitting the peak points (1.4.2) of the specially formed mold disc (1.4) which are aligned on the metal drum (1.3) to the trough point (1.4.3) of the consequent specially formed mold disc (1.4). The arrangement of the specially formed mold discs (1.4), which are separately aligned in figure 2, can be performed without taking the axis of the peak points (1.4.2) and trough points (1.4.3) into consideration. After the alignment is finished and the discs are squeezed per se, an adjustment/shifting with regard to the axis is done so that the peak points (1.4.2) and/or the trough points (1.4.3) of the specially formed mold discs (1.4) fit into each other.
A different geometrical shape of the lateral surfaces which are to be altered according to the geometrical form of the mold cavities (1.4.1) of the specially formed mold disc (1.4) of the present invention is shown in figure 7.

Any geometrical form can be adopted provided that the lateral surfaces (1.4.4) of the specially formed mold discs (1.4) fit onto the other specially formed mold disc (1.4). For this, the peak points (1.4.2) and the trough points (1.4.3) at the lateral surfaces (1.4.4) may be rounded and/or have a form with sharp protrusions and recesses according to the geometrical shape of the mold cavity (1.4.1).

The mold cavity (1.4.1) which is disposed on the specially formed mold disc (1.4) limited by two lateral surfaces (1.4.4) may be in different dimensions and different geometrical shapes but also may be in the same geometrical form.

The mold cavities (1.4.1) disposed on the specially formed mold discs (1.4) are arranged with the same intervals of axis or different interval of axis. When the intervals of axis of the products leaving the specially formed mold discs (1.4) are equal, the movements of the products after leaving the furnace can be automated. This has a positive contribution to the line automation.

By means of the peak points (1.4.2) and trough points (1.4.2) of the specially formed mold discs (1.4) which fit into each other, the present invention provides an opportunity to dispose more product both into the specially formed mold discs (1.4) and also along the same length of metal drum (1.3), as compared to the prior art. This leads to an opportunity to a capacity increase without making any change on the line.
The distribution of the mold cavities (1.4.1) among the rotational mold (1) metal drum (1.3) made of specially formed mold discs (1.4) is homogeneous. The products leaving the mold cavities (1.4.1) in a homogeneous form are fed into the furnace, again in a homogeneous form. Thereby baking quality of the product is enhanced.

The coupling of all elements of the rotational mold (1) having specially formed mold discs (1.4) according to present invention are coupled to the metal drum (1.3), firstly, via the coupling piece of the metal drum (1.2) of the driving shaft (1.1). Afterwards, specially formed mold discs (1.4) having contacted lateral surfaces (1.4.4) are aligned by being slid over the metal drum (2). After aligning the specially formed mold discs (1.4), coupling piece (1.2) of the metal drum is located at the other end of the metal drum (1.3) and lastly other driving shaft (1.1) is coupled. Thereby coupling is completed.

By means of juxtaposition of the specially formed mold discs (1.4) on the metal drum (1.3) and the protrusions and recesses formed by the peak points (1.4.2) and trough points (1.4.3) of the lateral surfaces (1.4.4) of the specially formed mold discs (1.4), coupling of the two specially formed mold discs (1.4) can be done without the need for slotting.

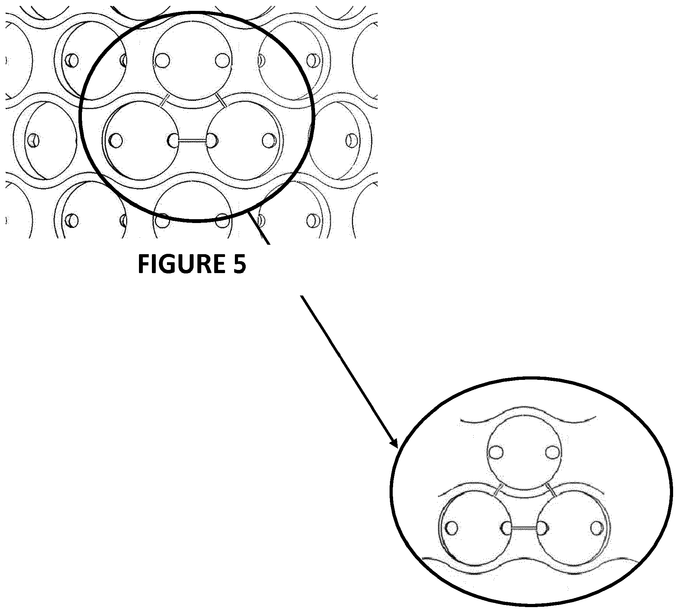

After aligning two specially formed mold discs (1.4) side by side, the centers are aligned so that the peak points (1.4.2) of a specially formed mold disc (1.4) fits to the trough point (1.4.3) of the other specially formed mold disc (1.4). After aligning any two specially formed mold discs (1.4) side by side, the distance between each of the three mold cavities (1.4.1), which are formed by one mold disc (1.4.1) disposed on a specially formed mold disc (1.4) and the two mold discs (1.4.1) disposed on the consequent specially formed mold disc (1.4), is equal (figure 5); thereby a homogeneity in baking is achieved and more mold cavities (1.4.1) can be disposed on the mold disc (1.4) as compared to the prior art.

## Claims

1. A rotational mold (1) designed to shape a soft dough to be used in bakery products such as biscuits, crackers and the like, wherein the mold has more than one mold cavities (1.4.1) in same or different geometrical forms in which the soft dough is to be inserted, a metal drum (1.3) which houses mold discs (1.4) where the mold cavities (1.4.1) are consecutively aligned on the mold disc (1.4) so as to be in accordance with the geometrical form of consecutive mold cavities (1.4.1), **characterized in that** mold discs (1.4) located on the metal drum (1.3) which are limited by lateral surfaces (1.4.4) having at least one peak point (1.4.2) as a protrusion and at least one trough point (1.4.3) as a recess which is formed along the distance (1) between two mold cavities (1.4.1) wherein the mold discs (1.4) are aligned juxtaposed so as to be the peak point (1.4.2) of one mold disc (1.4) fits to the trough point (1.4.3) of the consecutive mold disc (1.3) without leaving any space between said mold discs (1.4).

2. Rotational mold (1) according to Claim 1, **characterized in that** the peak points (1.4.2) and the trough points (1.4.3) of lateral surfaces (1.4.4) have a rounded form and/or a form with sharp protrusions and recesses.

3. Rotational mold (1) according to Claim 1, **characterized in that,** the mold cavities (1.4.1) which are disposed on the mold discs (1.4) which are limited by two lateral surfaces (1.4.4) are in different or same dimensions

4. Rotational mold (1) according to Claim 1, **characterized in that,** mold discs (1.4) which are attached to the metal drum (1.3) are juxtaposed on the metal drum (1.3) and, functioning as a slotting, transmit the motion to each other; and **in that**, the peak point (1.4.2) formed on the mold disc (1.4) on which a mold cavity (1.4.1) is housed fits to free space at the trough point (1.4.3) of the consecutive mold disc (1.4), thereby locking is achieved.

5. Rotational mold (1) according to Claim 1, **characterized in that** the mold disc (1.4) has mold cavities (1.4.1) which are aligned in equal intervals of any axis.

## Patentansprüche

1. Eine Rotations-Gießform (1), die so gestaltet ist, ein weicher Teig zu formen, der in Backwaren wie beispielweise Gebäck, Kekse und ähnlich z verwenden ist, wobei die Gießform mehr als ein Formhohlraum (1.4.1) in der geometrisch gleichen oder unterschiedlichen Formen, in die der weiche Teig einzugehen ist, und eine Metaltrommel (1.3) umfasst, die die Gießformsplatten (1.4) unterbringt, wo der Formhohlraum (1.4.1) nacheinander auf der Gießformplatte (1.4) ausgerichtet ist, sodass er mit der geometrischen Form der nacheinanderfolgenden Formhohlräume (1.4.1) übereinstimmt, **dadurch gekennzeichnet, dass** Gießformplatten (1.4) auf der Metaltrommel (1.3), die von der seitlichen Oberflächen (1.4.4) begrenzt sind, als ein Vorsprung mindestens ein Höhepunkt (1.4.2) und als eine Aussparung mindestens ein Tiefstpunkt (1.4.3), der entlang des Abstand (1) zwischen zwei Gießformhohlräumen (1.4.1) ausgebildet ist, wobei die Gießformplatten (1.4) nebeneinandergestellt ausgerichtet sind, sodass der Höhepunkt eines Gießformplatte (1.4) zu dem Tiefstpunkt eines Gießformplatte (1.4) anpasst, ohne kein Raum zwischen die Gießformplatten (1.4) zu verlassen.

2. Rotations-Gießform (1) nach Anspruch 1, **dadurch gekennzeichnet, dass** der Höhepunkt (1.4.2) und der Tiefstpunkt (1.4.3) der seitlichen Oberflächen (1.4.4) eine abgerundete Form und/oder eine Form mit scharfen Vorsprüngen und Aussparungen umfassen.

3. Rotations-Gießform (1) nach Anspruch 1, **dadurch gekennzeichnet, dass** die Formhohlräume (1.4.1), die auf der Gießformplatten (1.4) angeordnet sind, die von den zwei seitlichen Oberflächen (1.4.4) begrenzt sind, unterschiedliche oder gleiche Abmessungen haben.

4. Rotations-Gießform (1) nach Anspruch 1, **dadurch gekennzeichnet, dass** Gießformplatten (1.4), die an die Metaltrommel (1.3) befestigt sind, auf der Metaltrommel (1.3) nebeneinanderstellt sind und die Bewegung zueinander derart übertragen, dass sie als eine Schlitzung bedienen; und also, der auf der Gießformplatte (1.4) ausgebildete Höhepunkt (1.4.2), auf dem ein Formhohlraum (1.4.1) unterbracht ist, zu dem freien Raum auf dem Tiefstpunkt (1.4.3) der nacheinanderfolgenden Gießformplatte (1.4) und dadurch die Verriegelung erreicht ist.

5. Rotations-Gießform (1) nach Anspruch 1, **dadurch gekennzeichnet, dass** die Gießformplatte (1.4) Formhohlräumen (1.4.1) umfasst, die in die gleichen Abstände von Achse ausgerichtet sind.

## Revendications

1. Un moule rotatif (1) conçu pour former une pâte molle à utiliser dans les produits de boulangerie tels que des biscuits, des biscuits salés et similaires, dans lequel le moule comporte plusieurs cavités de moule (1.4.1) de formes géométriques identiques ou différentes dans lesquelles la pâte molle à être insérée, un tambour métallique (1.3) qui loge des disques de moule (1.4) où les cavités de moule (1.4.1) sont alignées consécutivement sur le disque de moule (1.4) de manière à être conformés à la forme géométrique des cavités de moule consécutives (1.4.1), **caractérisé en ce que**,
les disques de moule (1.4) sont situés sur le tambour métallique (1.3) qui sont limités par des surfaces latérales (1.4.4) ayant au moins un sommet (1.4.2) et au moins un creux (1.4.3) qui sont formés le long de la distance (1) entre deux cavités de moule (1.4.1) dans lequel les disques de moule (1.4) sont alignés juxtaposés de manière à ce que le sommet (1.4.2) d'un disque de moule (1.4) s'adapte au creux (1.4.3) du disque de moule consécutif (1.3) sans laisser d'espace entre lesdits disques de moule (1.4).

2. Moule rotatif (1) selon la revendication 1, **caractérisé en ce que** les sommets (1.4.2) et les creux (1.4.3) des surfaces latérales (1.4.4) ont une forme arrondie et/ou pointu.

3. Moule rotatif (1) selon la revendication 1, **caractérisé en ce que** les cavités de moule (1.4.1) qui sont disposées sur les disques de moule (1.4) qui sont limitées par deux surfaces latérales (1.4.4) sont de dimensions différentes ou identiques.

4. Moule rotatif (1) selon la revendication 1, **caractérisé en ce que** les disques de moule (1.4) qui sont fixés au tambour métallique (1.3) sont juxtaposés sur le tambour métallique (1.3) et, fonctionnant comme une rainure, transmettent le mouvement l'un à l'autre ; et **en ce que**, le sommet (1.4.2) formé sur le disque de moule (1.4) sur lequel une cavité de moule (1.4.1) est logée s'ajuste à l'espace libre au creux (1.4.3) du disque de moule consécutif (1.4), le verrouillage est ainsi obtenu.

5. Moule rotatif (1) selon la revendication 1, **caractérisé en ce que** le disque de moule (1.4) a des cavités de moule (1.4.1) qui sont alignées à intervalles égaux de tout axe.
